# EUROPEAN PATENT SPECIFICATION

(11) **EP 1 829 257 B1**
(45) Date of publication and mention of the grant of the patent: **04.11.2009**
(21) Application number: 05849965.8
(22) Date of filing: 15.12.2005
(51) Int. Cl.: H04J 3/14, H04Q 11/04

(54) **REMOTE STATUS FORWARDING IN A DISTRIBUTED CROSS-CONNECTION SYSTEM**
FERNSTATUSWEITERLEITUNG IN EINEM VERTEILTEN QUERVERBINDUNGSSYSTEM
TRANSMISSION D'ETAT A DISTANCE DANS UN SYSTEME DE REPARTITION DISTRIBUE

(30) Priority: 17.12.2004 US 15964
(43) Date of publication of application: 05.09.2007
(73) Proprietor: Intel Corporation, Santa Clara, CA 95052 (US)
(72) Inventor: HO, Michael, Burnaby, BC V5C-2X6 (CA); QUNELL, Miriam, Naperville, IL 60540 (US); CAIA, Jean-Michel, San Francisco, CA 94112 (US); FALKINGHAM, Chris, Vancouver, BC V6H 2L6 (CA)
(74) Representative: Beresford, Keith Denis Lewis
(86) International application number: PCT/US2005/045850
(87) International publication number: WO 2006/066165

(56) References cited:
- EP-A- 0 981 216
- EP-A- 1 463 370
- US-A1- 2002 176 130
- US-A1- 2002 191 648

## Description

### BACKGROUND OF THE INVENTION

### Field of the Invention

The present invention relates generally to the field of high-speed data transfer, and more specifically to managing remote status indications within a data transfer architecture.

### Description of the Related Art

Current high-speed high bandwidth data communication systems employ a variety of components to facilitate the receipt and transmission of data packets. Among the components used are network nodes, which may include functional components such as framers and cross-connects between components that allow data transport over at least one channel. A framer is a device that handles the overhead processing and statistics for the SONET/SDH connection and provides a method of distinguishing digital channels multiplexed together. The framer designates or marks channels within a bit stream, providing the basic time slot structure, management, and fault isolation for the network node. The cross connect allows portions of a digital bit stream to be rerouted or connected to different bit streams. Cross connects enable data traffic to be moved from one SONET ring to the next ring in its path to the destination node.

Typically, these high-speed high bandwidth data communication systems are realized by interconnecting a large number of network nodes to receive and transmit ever-increasing amounts of data. The status of the various components in the network, including the network nodes, is typically maintained and may be provided to particular components under different circumstances. The network may provide remote status indicators to inform a remote component of a local component's status.

The problem with providing remote status indication in a distributed system employing an asymmetric connection is that status is generally inefficiently transmitted from the local device to the remote device. Inefficiencies may include the need for added device interfaces or board traces to receive or transmit the status indicators, difficulty in synchronizing the cross connect from the receiving channel to the transmitting channel with the cross connect for the data at the transmitting device, and separation of cascaded connection matrices for multiple layers. In short, many ways exist for the remote status indication to fail to reach the remote device, or for the indication to reach the remote device in an imperfect form or manner.

EP0981216 discloses an in-band fault detection and isolation system and method for networks such as synchronous optical networks/ synchronous digital hierarchy (SONET/SDH) networks. A new signal, called a fault isolation signal in the path, is proposed. The new signal may be used in lieu of an AIS-P to support special applications on certain digital cross connect (DCS)-to- DCS path segments.

EP1463370 discloses transmission signals in a transport network which multiplex from traffic streams respectively representing paths. Each path is identified with a path tag and forwarding information is provided in each network element. Failed paths in the network are restored in that the source network elements cross-connects the affected traffic stream to an alternate output port and subsequent network elements receiving this unexpected traffic stream at an input port check the received path tag, determine an appropriate output port based on the tag and the forwarding information, and establish an internal cross-connection between the input port and corresponding output port.

US2002/0191648 discloses a method and a network element for manifesting alarms by forming a so-called combined Data Quality Byte (DQB) for a particular SONET/SDH data transmission stream. The DQB indicates status of alarms at a particular location of the telecommunication network, via which the stream is transmitted. The DQB can be formed by arranging a plurality of alarm signals, currently actual for the particular data transmission stream, in a predetermined byte associated with the steam frame.

US2002/0176130 discloses that in an optical node of an optical communication network, a number of paths are accommodated through optical node components between incoming and outgoing optical links of the node. A first table memory divides each of the established paths into a number of successive optical fibre sections and stores and matrix pattern of reference fault/normal indications of the path and the optical fibre sections. A second table memory is provided into which a pattern of actual fault/normal indications of the established path is stored when an alarm message is received from the downstream end of an established path.

A design that provides for and efficiently transmits remote status indications may provide increased throughput and other advantageous qualities over previously known designs, including designs employing SONET/SDH architecture.

### DESCRIPTION OF THE DRAWINGS

The present invention is illustrated by way of example, and not by way of limitation in the Figures of the accompanying drawings in which:
FIG. 1A is a conceptual illustration of a SONET/SDH communications switching system employing the design provided herein;
FIG. 1B shows a suitable system embodiment relating to an embodiment of the present invention;
FIG. 2 illustrates the general traffic flow and forwarding mechanism configuration within a single component or device;
FIG. 3 shows remote status forwarding operation in cascaded connection matrices in a SONET/SDH environment; and
FIG. 4 illustrates remote status forwarding using a unified cascaded connection matrix according to the invention.

### DETAILED DESCRIPTION OF THE INVENTION

Reference will now be made in detail to the preferred embodiments of the design, examples of which are illustrated in the accompanying drawings and tables. While the design will be described in conjunction with the preferred embodiments, it will be understood that they are not intended to limit the design to those embodiments. On the contrary, the design is intended to cover alternatives, modifications, and equivalents, which may be included within the scope of the design as defined by the appended claims.

The present design may offer an architecture and methodology for providing remote indicators to remote entities. The design may include determining the receive defect status, where the receive defect status is the status of the receiving or local device. The design may further transport this receive defect status to multiple elements in the distributed system, typically using a fabric, such as a unified high order (HO) and low order (LO) fabric. The design may further establish and employ a connection matrix within multiple network elements to move the defect status to the appropriate corresponding transmit channels. The connection matrix is a matrix containing a listing of all connections to components. If, for example, component X is connected to component Y, and X can transmit and Y can receive, the connection matrix at the intersection of "X transmit" and "Y receive" may include a "True" or "1" or other appropriate indication. Finally, the present design may generate and transmit remote status indicators using the arrangement so established.

In a SONET/SDH architecture, several levels of multiplexing hierarchy use these remote indicators, including Multiplex Section (Line), High Order Path (STS Path), High Order Tandem Connection, Low Order Path (VT Path), and Low Order Tandem Connection. As discussed herein, the High Order Path remote status indicators HP-RDI and HP-REI carried on the G1 High Order Path Overhead byte are discussed, while it is understood that other applicable remote indicators, including those not conforming to SONET/SDH, may be employed.

Data transmission over fiber optics networks may conform to the SONET and/or SDH standards. SONET and SDH are a set of related standards for synchronous data transmission over fiber optic networks. SONET is short for Synchronous Optical NETwork and SDH is an acronym for Synchronous Digital Hierarchy. SONET is the United States version of the standard published by the American National Standards Institute (ANSI). SDH is the international version of the standard published by the International Telecommunications Union (ITU). As used herein, the SONET/SDH concepts are more fully detailed in various ANSI and ITU standards, including but not limited to the discussion of "health", Bellcore GR-253, ANSI T1.105, ITU G.707, G.751, G.783, and G.804.

### System Design

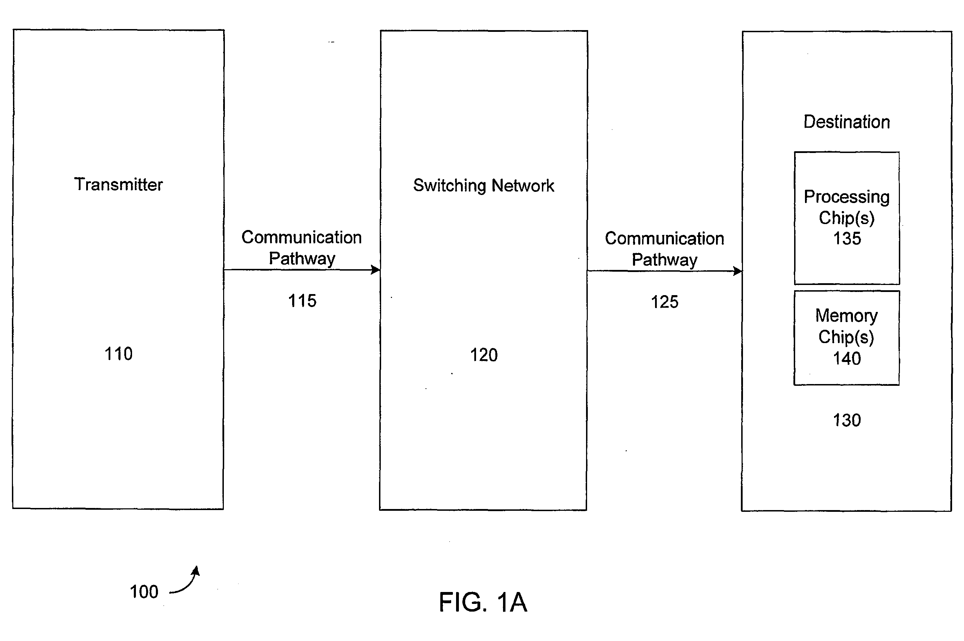

A typical SONET/SDH switching system 100 is shown in FIG. 1A. In the SONET/SDH switching system 100, a transmitter 110 is connected through a communication pathway 115 to a switching network 120. Switching network 120 is connected through a communication pathway 125 to a destination 130. The transmitter 110 sends data as a series of payloads/frames to the destination 130 through the switching network 120. In the switching network 120, packets typically pass through a series of hardware and/or software components, such as servers. As each payload arrives at a hardware and/or software component, the component may store the payload briefly before transmitting the payload to the next component. The payloads proceed individually through the network until they arrive at the destination 130. The destination 130 may contain one or more processing chips 135 and/or one or more memory chips 140.

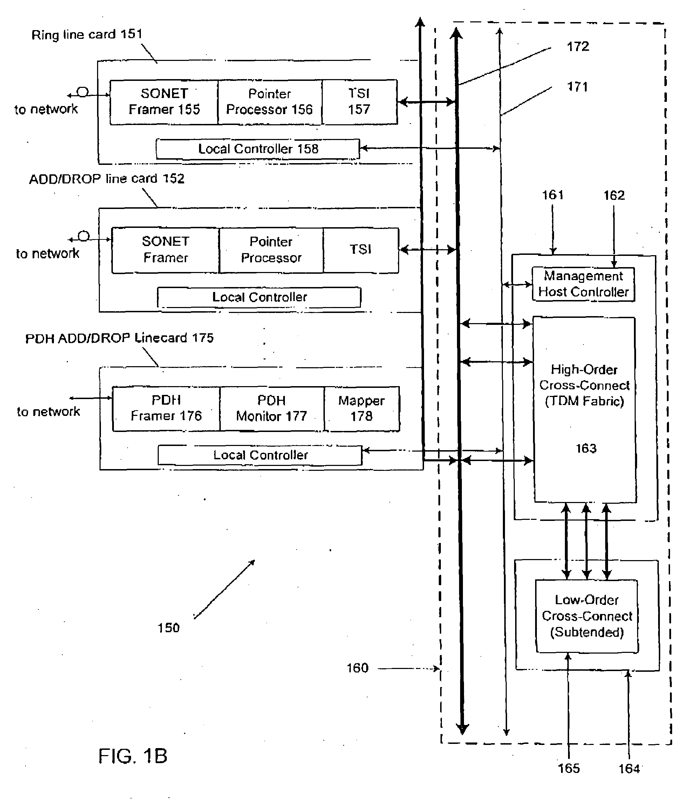

FIG. 1B is a drawing of a typical SONET/SDH Add-Drop Multiplex (ADM) 150. The ADM 150 manages SONET/SDH network topologies, the most typical topology being a ring. In a ring topology, the ADM 150 connects to the ring using two linecards: a first (ring) linecard 151 connected to the West Interface and a second (ADD/DROP) linecard 152 connected to the East Interface. Other linecards can be used as traffic sources and sinks (not shown), where a source may be involved in an ADD operation, and a sink may be involved in a DROP operation. An ADD operation inserts traffic from the source onto the ring, and a DROP operation removes traffic off the ring to the sink.

Each ring linecard, such as first linecard 151, may include a framer 155, pointer processor 156, and a timeslot interchange (TSI) 157. The framer 155 can be used to locate the beginning of a SONET/SDH frame. The pointer processor 156 may locate the payload and align the payload for the TSI and fabric 160. The TSI 157 may move or groom timeslots within an SONET/SDH frame to provide orderly traffic to the fabric card 161.

Different types of ADD/DROP linecards exist. Some ADD/DROP linecards may handle Ethernet packets, Plesiosynchronous digital hierarchy (PDH) traffic (T1, T3, E1, E3, etc), and/or transit traffic from other SONET/SDH rings. Other types of ADD/DROP linecards may include transit ADD/DROP linecards, similar to the RING linecards. A PDH linecard may contain a T1/E1 framer that searches for the beginning of T1/E1 frame, a performance monitoring function for tracking the status of the incoming frame, and a mapper to insert the PDH traffic into a SONET/SDH frame, thus making the PDH traffic understandable to the fabric 160. PDH ADD/DROP linecard 175 includes PDH framer 176, PDH Monitor 177, and mapper 178.

Fabric management card 161 contains management host controller 162 and high order cross connect or TDM fabric 163, and may interface with subtended fabric 164 containing low-order cross-connect 165. The subtended fabric 164 may fit in one or more line card slots. Fabric backplane 171 may be TFI-5 or proprietary, for example. Control plane 172 may be PCI compatible or a simple microcontroller interface depending on the application. Other configurations may be employed for the backplane and control plane elements.

The transmission path of the ADM 150 comprises a time division multiplexing (TDM) fabric or cross-connect 160 that moves traffic among all the linecards attached to the fabric 160. A high-order cross-connect or fabric moves high-order SONET/SDH containers between linecards and amongst timeslots within a SONET/SDH framer. A full function ADM 150 can manipulate low-order as well as high-order SONET/SDH containers. The low-order manipulation can be performed in a subtended low-order cross-connect. Use of multiple fabrics may create issues that could be resolved by providing a single, unified fabric as is done in the current design.

### Remote Status Indicator Design

A transport network node has multiple receive and transmit ports by which the transport network and access networks are connected. These nodes typically have large aggregate bandwidths, receiving and transmitting significant quantities of data per unit of time, and use multiple ports to transmit and receive this data. Nodes may be implemented using multiple framer processors, and such a system is considered "distributed" from the node's point of view. The connection between the receive and transmit ports and the remote system or device may require more than a single framer device. Use of such a multiple framer device to connect to a remote system is called an asymmetric connection. The need for asymmetric connections may arise from the desired implementation of the nodes and/or the type of protection switching employed, where protection switching may provide for switching to an alternate component or resource in the event of a failure.

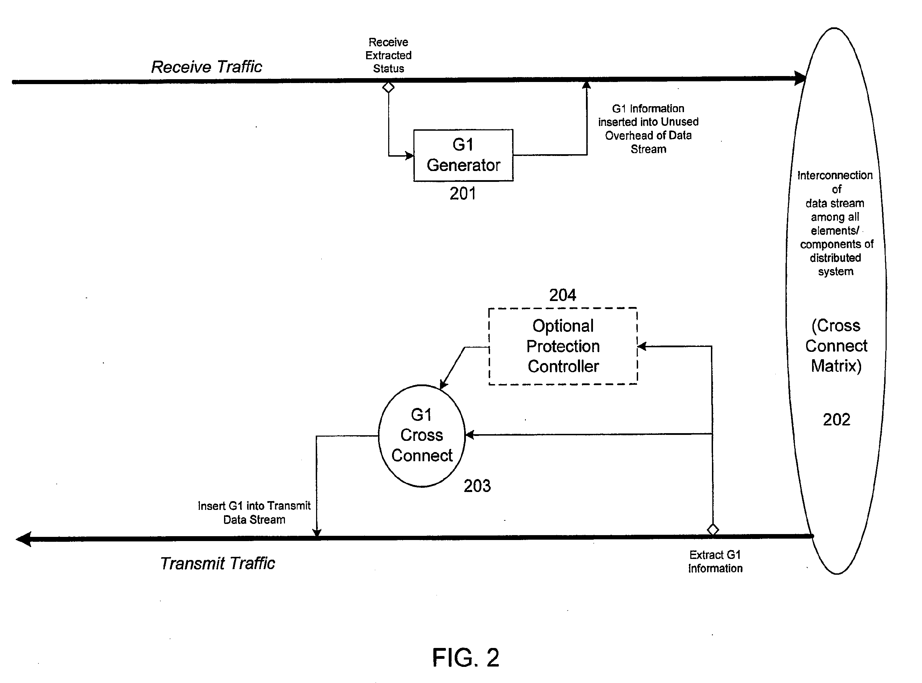

One aspect of an implementation of a remote status mechanism is illustrated in FIGs. 2-4. The design may include determining the receive defect status, transporting the receive defect status to multiple elements in the distributed system or, in some circumstances, to all elements of the distributed system, providing a connection matrix within each element to move the defect status to appropriate or applicable corresponding transmit channels, and generating and transmitting remote status indicators.

In operation, the receiving device detects the receive defect condition. The receiving device inserts the receive defect condition into any unused data slots in the output data stream connected to each element of the distributed system. The transmitting device may extract the condition or status, and the condition or status may be provided by cross connect to appropriate transmitting channels. The status may be employed to generate remote status indicators for the far-end or remote system. Generation of the remote status indicator may be performed at the receiving device, before transporting across devices, or at the transmitting device after submission to the cross connect.

FIG. 2 illustrates the general traffic flow and forwarding mechanism configuration within a single device. As may be appreciated, multiple devices may be interconnected to provide extended capabilities, with the ability to provide information between devices using a cross connect. The features of FIG. 2 are included within a single framer device. The top path represents the receive data stream or traffic flow, while the bottom path represents the transmit data stream or traffic flow. In a SONET/SDH configuration, the data stream may include all overhead and pointer processing data. Element 201 is a G1 generator, where G1 represents a byte within overhead of the transmitted data in a SONET/SDH configuration. G1 generator 201 receives the status extracted from the receive traffic flow, generates a G1 value, and inserts the G1 information into the unused overhead of the data stream. The data including the G1 information then passes to cross connect 202, which represents an interconnection of the data stream among all elements of the distributed system. In the transmit traffic flow path, G1 information is extracted at the point shown, and the G1 information provided to the G1 cross connect 203. Optional protection controller 204 may be included to monitor the availability of G1 information, and if no G1 information is present, the G1 cross connect 203 may not operate to insert G1 data into the transmit stream. Without optional protection controller 204, the G1 cross connect 203 will continuously extract and insert G1 data in all circumstances.

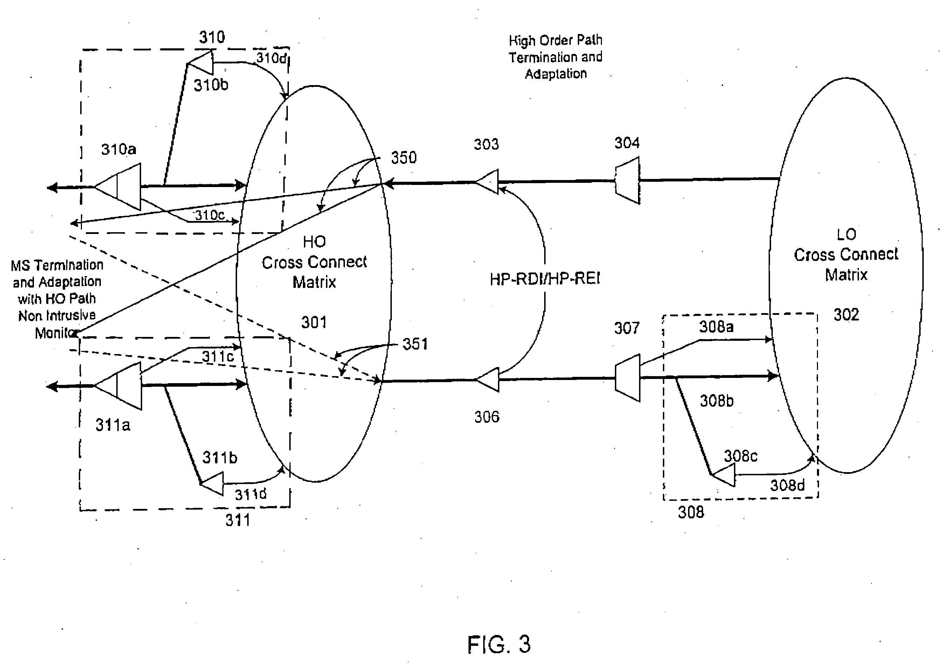

FIG. 3 illustrates G1 remote status forwarding in cascaded connection matrices. The present design uses separate high order (HO) cross connect matrix 301 and low order (LO) cross connect matrix 302 to process and pass data. From FIG. 3, HO cross connect matrix 301 is connected to LO cross connect matrix 302 by a high order path termination and adaptation connections. Each triangle such as that shown as element 303 represents a termination point, which terminates the overhead and the container transmitted. The trapezoidal elements, such as element 304, are adaptation elements that adapt and pass the payload portion of the message. Adaptation comprises pointer determination and/or pointer generation in this content. The combination element, such as element 305, represents both the termination and the adaptation of the message received.

From FIG. 3, data may flow from LO cross connect matrix 302 to HO cross connect matrix 301 through adaptation element 304 and termination element 303. Data may alternately flow from HO cross connect matrix 301 to LO cross connect matrix 302 through termination element 306 and adaptation element 307. Both of these paths represent the high order path termination and adaptation functionality.

The LO cross connect matrix 302 interfaces with adaptation element 307 using arrangement 308, which includes path 308a, path 308b, termination element 308c, and path 308d. Path 308b, termination element 308c, and path 308d provide For low order path non-intrusive monitoring, enabling monitoring of the content of the low order path and the data provided from HO cross connect matrix 301 to LO cross connect matrix 302. Such monitoring enables evaluating the data flowing to the LO cross connect matrix 302, and if acceptable, forwarding the data to the LO cross connect matrix 302. If the data is all LO and no monitoring is needed, path 308a passes the data to the LO cross connect matrix 302.

Termination elements 303 and 306 interface by termination element 306 picking out HP-RDI/HP-REI, the high order path remote data indicator/remote error indicator, where the remote error indicator provides a count of bit errors. In SONET/SDH, G1 includes the high order protocol/layer remote defect indicator, where D5 includes the low order protocol/layer remote defect indicator.

Features 310 and 311 include elements 310a and 310b, and paths 310c and 310d as well as elements 311a and 311b, and paths 311c and 311d, respectively. The two paths 310c and 310d as well as 311c and 311d represent two different incoming streams from the Management System (MS). Element 310a/311a is a combination termination/adaptation component that terminates and adapts the MS data received. Element 310b/311b is a termination component in a high order path non-intrusive monitor.. Each path 310c/311c contains a high order path non-intrusive monitor, and each operates to detect a defective or bad message received. If such a defective message is located, operation switches to the other data path 310d/311d from the MS to the HO cross connect matrix 301. Monitoring may be bypassed if undesired or unnecessary, or in the event pointers or the high order payload are unavailable. The lines numbered 350 and 351 represent incoming data from outside or remote sources (lines 350) and data outgoing to outside or remote sources.

By way of definition, in the scenario presented, a distributed cross connect arrangement indicates multiple components that are interconnected to form a relatively large capacity non-blocking cross connect. For a network comprising four devices, where each device has a non-blocking cross connect bidirectional capacity of 20Gbps, The entire networks becomes a single non-blocking cross connect with 80 Gbps bidirectional capacity.

Non-blocking in this context means that any timeslot can be cross connected to any one or other timeslot without being blocked by connections of another timeslot to yet other timeslots. Timeslot A can be cross connected to timeslot B without being blocked by timeslot C being connected to timeslot D. Bidirectional capacity is a term indicating that capacity is summed, such that 10 Gbps counts for both output and input capacity. 80 Gbps means 80 Gbps of input and 80 Gbps of output. Interconnecting elements to form an equivalent but larger capacity element is termed "stacking."

Unifying the cascaded cross connect tends to minimize the number of physical interconnections and bandwidth required to stack cross connection elements. In the case of separate high order and low order cross connections, elements generally may require, in a SONET implementation for example, 80 Gbps of bidirectional bandwidth for each of the low order and high order cross connects for a total of 160 Gbps bidirectional. In the unified case, transmission and reception only requires 80 Gbps bidirectional.

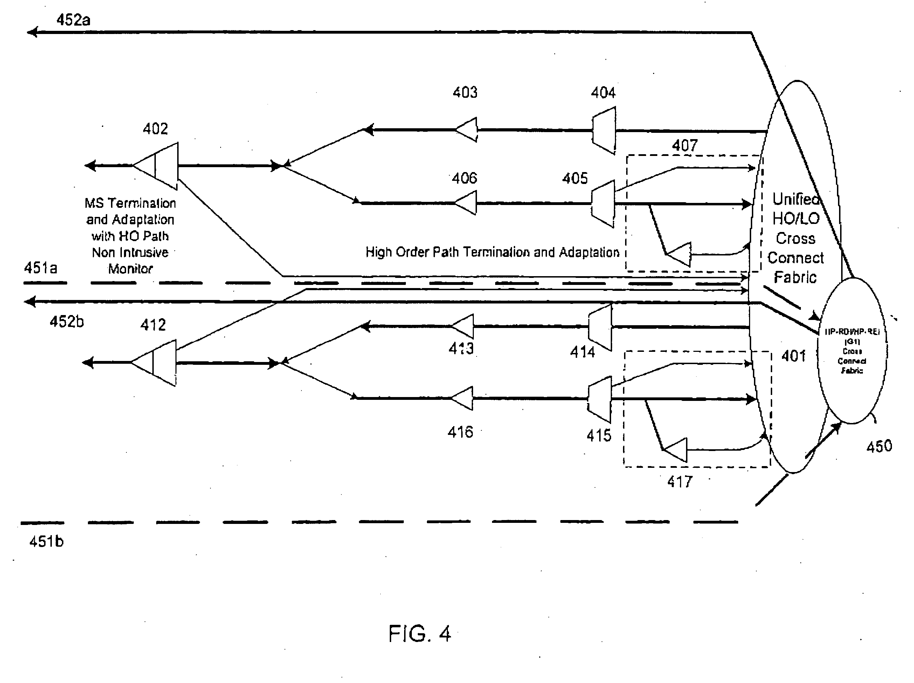

The present design may include a unified HO/LO cross connect fabric 401 as shown in FIG. 4. Use of the design of FIG. 4 in a SONET/SDH environment can include broadcasting the G1 high order data to meet high order UPSR (unidirectional path) requirements with low order grooming in a unified matrix. The unified HO/LO cross connect fabric may include a HP-RDI/HP-REI (G1) cross connect fabric 450, referred to here as a remote data indicator cross connect fabric 450. The G1 value received at this remote data indicator cross connect fabric 450 may be extracted from the incoming data stream and interpreted.

The unified cross connect fabric 401 connects all distributed elements and specifically both the high order and low order aspects of each in a single fabric rather than two separate fabrics. Such a design allows for a single matrix to perform the interconnect functions of the cross connect fabric. Fabrication of a unified cross connect fabric comprises simply combining all performance of the HO and LO cross connect fabrics 301 and 302 from FIG. 3 into a single unified cross connect fabric, addressing both high order and low order functionality.

From FIG. 4, two paths are available to address unified HO/LO cross connect fabric 401, namely an upper path and a lower path. The upper path includes combined element 402, termination element 403, adaptation element 404, as well as adaptation element 405, termination element 406, and low order path non-intrusive monitor 407. As with the previous design of FIG. 3, the low order path non-intrusive monitor monitors the low order path for and may remove unacceptable data. This low order path non-intrusive monitor 407 may be bypassed. The lower path offers similar components, namely combined element 412, termination element 413, adaptation element 414, as well as adaptation element 415, termination element 416, and low order path non-intrusive monitor 417. As contrasted with the design of FIG. 3, a single interconnection is provided with a single fabric to and from external distributed elements, and rather than processing a high order matrix and its functionality in addition to a low order matrix and its associated functionality, a single fabric is operated. The design of FIG. 4 provides for a cascaded connection matrix using interconnected elements and devices using a single point of connection. The single point of connection enables centralized control of all protection schemes at all protection levels. Centralization can be employed using a single controller, where the FIG. 3 design required a plurality of controllers. All statuses from all layers may be available using the design of FIG. 4.

Additional incoming and outgoing data paths are presented as incoming paths 451a and 451b and outgoing paths 452a and 452b. As shown, these paths interface directly with remote data indicator cross connect fabric 450 and may pass through or employ unified HO/LO cross connect fabric 401. These paths typically include the HP-RDI and/or HP-REI signal values.

It will be appreciated to those of skill in the art that the present design may be applied to other systems that perform data processing, and is not restricted to the communications structures and processes described herein. Further, while specific hardware elements and related structures have been discussed herein, it is to be understood that more or less of each may be employed while still within the scope of the present invention. Accordingly, any and all modifications, variations, or equivalent arrangements, which may occur to those skilled in the art, should be considered to be within the scope of the present invention as defined in the appended claims.

## Claims

1. A method for providing status of a remote component (110) in a communication network, comprising:
receiving a remote receive defect status from the remote component (110) at a distributed component (120) separate from the remote component (110) on either a high order or a low order communication path;
extracting the remote receive defect status from a packet stream from the remote component (110) ; **characterised by**:
generating (201) a defect value and passing the defect value to a unified high order and low order cross connect matrix (401) within the distributed component (110) using an overhead byte (G1) ;
altering the unified high order and low order cross connect matrix (401) maintained to indicate defect status for a transmit channel corresponding to the remote component (110) based on the defect value; and
transmitting the defect value using the overhead byte (G1) to appropriate transmit channels.

2. The method of claim 1, further comprising generating (203) a defect indicator based on the remote receive defect status after determining the remote receive defect status from the remote component (110), and further comprising transmitting the defect indicator with the remote receive defect status to the distributed component (120).

3. The method of claim 1, further comprising generating a defect indicator based on the remote receive defect status at the distributed component (120) subsequent to the transmitting the extracted remote receive defect status to the distributed component (120).

4. The method of claim 1, wherein said transmitting occurs via the cross connect (401).

5. The method of claim 1, wherein the remote receive defect status is included within unused overhead slots in data transmitted by the remote component (110).

6. A component (120) for providing a receive defect status of a remote component (110) to a plurality of distributed components (130) in a communication network, said component comprising:
means to receiver the remote receive defect status from the remote component (110) at the component (120) separate from the remote component;
means to extract the remote receive defect status from a packet stream from the remote component (110); **characterised by** :
means to generate a defect value and pass the defect value toan unified high order and low order connection matrix (401) maintained within the distributed component (110) using an overhead byte (G1);
means to alter the connection matrix (401) to indicate defect status for a transmit channel corresponding to the remote component (110) based on the defect value; and
means to transmit the defect value to appropriate transmit channels using the overhead byte (G1).

7. The component of claim 6 wherein the unified high order and low order cross connect fabric (401) is configured to provide an interface between the component (120) and the plurality of distributed components (130), said unified high order and low order cross connect fabric (401) interacting with a defect indication cross connect fabric configured to process remote defect indications, the component (120) further comprising:
a high order termination and adaptation path configured to receive high order data (402);
a low order termination and adaptation path configured to receive low order data (412), and
incoming and outgoing remote receive defect indication paths (451 a, 451b, 452a, 452b) for receiving remote defect status and transmit at least one remote defect indication using the overhead byte (G1) on either a high order or low order path and using the defect indication cross connect fabric, which incoming and outgoing remote defect indication paths are in parallel with the high order termination and adaptation path and the low order termination and adaptation path.

8. The component of claim 7, wherein said component (120) is for generating each remote defect indication based on a defect status determined at the component (120).

9. The component of claim 7, wherein said component (120) is for determining a defect status for the remote component (110).

10. The component of claim 9, wherein the component (120) is for transmiting the defect status for the remote component (110).

11. The component of claim 6, wherein alteration of the connection matrix (401) indicates defect status for a corresponding transmit channel associated with the distributed component (130).

12. The component of claim 7, wherein the high order termination and adaptation path comprises at least one termination component (403, 406) and at least one adaptation component (404, 405).

13. The component of claim 7, wherein the low order termination and adaptation path comprises at least one termination component (413, 416) and at least one adaptation component (414, 415).

14. A system comprising:
at least one component (120) as defined in any one of the preceding claims 6-13;
at least one line card (152, 175) comprising:
a framer (176); and
a controller; and
the unified high order and low order cross connect fabric (401) configured to provide intercommunication between the line card and the at least one component, wherein the fabric comprises :
a high order (163) termination and adaptation path (402) configured to receive high order data;
a low order (165) termination and adaptation path (412) configured to receive low order data; and
incoming and outgoing remote receive defect indication paths (451 a, 451b, 452a, 452b) for receiving the remote defect status and transmit at least one defect value to appropriate transmit channels using an overhead byte on either a high order or low order path through a defect indication cross connect fabric which incoming and outgoing remote defect indication paths are in parallel with the high order termination and adaptation path (402) and the low order (412) termination and adaptation path.

15. The system of Claim 14, wherein the fabric (401) is compatible with TFI-5.

16. The system of Claim 14, wherein the fabric (401) is compatible with CSIX.

17. The system of Claim 14, wherein the at least one line card (152,175) is capable of providing an interface for a Fibre Channel compatible network.

18. The system of Claim 14, wherein the at least one line card (152,175) is capable of providing an interface for an Ethernet compatible network.

19. The system of Claim 14, wherein the at least one line card (152,175) is capable of performing add-drop multiplexing.

## Patentansprüche

1. Verfahren zum Bereitstellen eines Status einer Remotekomponente (110) in einem Kommunikationsnetz, in dem
auf entweder einem hochrangigen oder einem niederrangigen Kommunikationspfad an einer verteilten Komponente (120), die von der Remotekomponente (110) getrennt ist, von der Remotekomponente (110) ein Remote-Empfangsfehlerstatus empfangen wird,
der Remote-Empfangsfehlerstatus aus einem Paketfluss von der Remotekomponente (110) extrahiert wird,
**dadurch gekennzeichnet, dass**
ein Fehlerwert erzeugt (201) und unter Verwendung eines Overheadbytes (G1) an eine vereinigte Hochrang- und Niederrang-Querverbindungsmatrix (401) in der verteilten Komponente (120) übergeben wird,
auf Grundlage des Fehlerwertes die vereinigte Hochrang-und Niederrang-Querverbindungsmatrix (401) verändert wird, die aufrechterhalten wird, um den Fehlerstatus eines der Remotekomponente (110) entsprechenden Übermittlungskanals anzuzeigen, und
unter Verwendung des Overheadbytes (G1) der Fehlerwert den passenden Übermittlungskanälen übermittelt wird.

2. Verfahren nach Anspruch 1, in dem ferner aufgrund des Remote-Empfangsfehlerstatus eine Fehleranzeige erzeugt (203) wird, nachdem der Remote-Empfangsfehlerstatus von der Remotekomponente (110) bestimmt worden ist, und in dem ferner der verteilten Komponente (120) die Fehleranzeige mit dem Remote-Empfangsfehlerstatus übermittelt wird.

3. Verfahren nach Anspruch 1, in dem ferner im Anschluss an die Übermittlung des extrahierten Remote-Empfangsfehlerstatus an die verteilte Komponente (120) auf Grundlage des Remote-Empfangsfehlerstatus an der verteilten Komponente (120) eine Fehleranzeige erzeugt wird.

4. Verfahren nach Anspruch 1, in dem die Übermittlung über die Querverbindung (401) erfolgt.

5. Verfahren nach Anspruch 1, in dem der Remote-Empfangsfehlerstatus in unbenutzten Overheadzeitfenstern in von der Remotekomponente (110) übermittelten Daten enthalten ist.

6. Komponente (120), die dazu dient, an mehrere verteilte Komponenten (130) in einem Kommunikationsnetz einen Empfangsfehlerstatus einer Remotekomponente (110) bereitzustellen, mit
einer Einrichtung, um an der von der Remotekomponente getrennten Komponente (120) von der Remotekomponente (110) den Remote-Emfangsfehlerstatus zu empfangen,
einer Einrichtung, um den Remote-Empfangsfehlerstatus aus einem Paketfluss von der Remotekomponente (110) zu extrahieren,
**gekennzeichnet durch**
eine Einrichtung, um einen Fehlerwert zu erzeugen und unter Verwendung eines Overheadbytes (G1) an eine vereinigte Hochrang- und Niederrangverbindungsmatrix (401) zu übergeben,
eine Einrichtung, um auf Grundlage des Fehlerwertes die Verbindungsmatrix (401) zu verändern, die in der verteilten Komponente (110) gehalten wird, um den Fehlerstatus eines der Remotekomponente (110) entsprechenden Übermittlungskanals anzuzeigen, und
eine Einrichtung, um unter Verwendung des Overheadbytes (G1) passenden Übermittlungskanälen den Fehlerwert zu übermitteln.

7. Komponente nach Anspruch 6, wobei die vereinigte Hochrang- und Niederrang-Querverbindungsstruktur (401) dazu ausgelegt ist, zwischen der Komponente (120) und den mehreren verteilten Komponenten (130) eine Schnittstelle bereitzustellen, wobei die vereinigte Hochrang- und Niederrang-Querverbindungsstruktur (401) mit einer Fehleranzeige-Querverbindungsstruktur wechselwirkt, die dazu ausgelegt ist, Remotefehleranzeigen zu verarbeiten, wobei die Komponente (120) ferner enthält:
einen hochrangigen Abschluss- und Anpasspfad, der dazu ausgelegt ist, hochrangige Daten (402) zu empfangen,
einen niederrangigen Abschluss- und Anpasspfad, der dazu ausgelegt ist, niederrangige Daten (412) zu empfangen, und
Eingangs- und Ausgangs-Remote-Empfangsfehleranzeige-Pfade (451a, 451b, 452a, 452b) zum Empfangen eines Remotefehlerstatus und Übermitteln mindestens einer Remotefehleranzeige unter Verwendung des Overheadbytes (G1) auf entweder einem hochrangigen oder einem niederrangigen Pfad und unter Verwendung der Fehleranzeige-Querverbindungsstruktur, wobei die Eingangs- und Ausgangs-Remotefehleranzeige-Pfade zum hochrangigen Abschluss- und Anpasspfad und dem niederrangigen Abschluss- und Anpasspfad parallel sind.

8. Komponente nach Anspruch 7, wobei die Komponente (120) dazu dient, jede Remotefehleranzeige aufgrund eines an der Komponente (120) bestimmten Fehlerstatus zu erzeugen.

9. Komponente nach Anspruch 7, wobei die Komponente (120) dazu dient, einen Fehlerstatus der Remotekomponente (110) zu bestimmen.

10. Komponente nach Anspruch 9, wobei die Komponente (120) dazu dient, den Fehlerstatus der Remotekomponente (110) zu übermitteln.

11. Komponente nach Anspruch 6, wobei die Änderung der Verbindungsmatrix (401) den Fehlerstatus eines der verteilten Komponente (130) zugehörigen entsprechenden Übermittlungskanals anzeigt.

12. Komponente nach Anspruch 7, wobei der hochrangige Abschluss- und Anpasspfad mindestens eine Abschlusskomponente (403, 406) und mindestens eine Anpasskomponente (404, 405) enthält.

13. Komponente nach Anspruch 7, wobei der niederrangige Abschluss- und Anpasspfad mindestens eine Abschlusskomponente (413, 416) und mindestens eine Anpasskomponente (414, 415) enthält.

14. System mit
mindestens einer Komponente (120) nach einem der Ansprüche 6 bis 13,
mindestens einer einen Rahmensetzer (176) und eine Steuerung enthaltende Leitungskarte und
der vereinigten Hochrang- und Niederrang-Querverbindungsstruktur (401), die dazu ausgelegt ist, zwischen der Leitungskarte und der mindestens einen Komponente einen Austausch bereitzustellen, wobei die Struktur Folgendes enthält:
einen hochrangigen (163) Abschluss- und Anpasspfad (402), der dazu ausgelegt ist, hochrangige Daten zu empfangen,
einen niederrangigen (165) Abschluss- und Anpasspfad (412), der dazu ausgelegt ist, niederrangige Daten zu empfangen, und
Eingangs- und Ausgangs-Remote-Empfangsfehleranzeige-Pfade (451a, 451b, 452a, 452b) zum Empfangen des Remotefehlerstatus und zum Übermitteln mindestens eines Fehlerwertes an passende Übermittlungskanäle unter Verwendung eines Overheadbytes auf entweder einem hochrangigen oder einem niederrangigen Pfad durch eine Fehleranzeige-Querverbindungsstruktur, wobei die Eingangs- und Ausgangs-Remotefehleranzeige-Pfade zum hochrangigen Abschluss- und Anpasspfad (402) und zum niederrangigen (412) Abschluss- und Anpasspfad parallel sind.

15. System nach Anspruch 14, wobei die Struktur (401) mit TFI-5 kompatibel ist.

16. System nach Anspruch 14, wobei die Struktur (401) mit CSIX kompatibel ist.

17. System nach Anspruch 14, wobei die mindestens eine Leitungskarte (152, 175) dazu geeignet ist, eine Schnittstelle zu einem zu Faserkanal kompatiblen Netz bereitzustellen.

18. System nach Anspruch 14, wobei die mindestens eine Leitungskarte (152, 175) dazu geeignet ist, eine Schnittstelle zu einem zu Ethernet kompatiblen Netz bereitzustellen.

19. System nach Anspruch 14, wobei die mindestens eine Leitungskarte (152, 175) dazu geeignet ist, Add-drop-Multiplexing durchzuführen.

## Revendications

1. Procédé pour fournir l'état d'un composant distant (110) dans un réseau de communication, comprenant :
la réception d'un état de défaut de réception distant à partir du composant distant (110) au niveau d'un composant réparti (120) séparé du composant distant (110) sur un trajet de communication soit d'ordre supérieur soit d'ordre inférieur ;
l'extraction de l'état de défaut de réception distant d'un train de paquets venant du composant distant (110) ;
**caractérisé par** :
la génération (201) d'une valeur de défaut et la transmission de la valeur de défaut à une matrice de connexion croisée d'ordre supérieur et d'ordre inférieur unifiée (401) à l'intérieur du composant réparti (110) à l'aide d'un octet de temps système (61) ;
l'altération de la matrice de connexion croisée d'ordre supérieur et d'ordre inférieur unifiée (401) maintenue de façon à indiquer un état de défaut pour un canal de transmission correspondant au composant distant (110) en fonction de la valeur de défaut ; et
la transmission de la valeur de défaut à l'aide de l'octet de temps système (61) à des canaux de transmission appropriés.

2. Procédé selon la revendication 1, comprenant de plus la génération (203) d'un indicateur de défaut en fonction de l'état de défaut de réception distant après la détermination de l'état de défaut de réception distant à partir du composant distant (110), et comprenant de plus la transmission de l'indicateur de défaut avec l'état de défaut de réception distant au composant réparti (120).

3. Procédé selon la revendication 1, comprenant de plus la génération d'un indicateur de défaut en fonction de l'état de défaut de réception distant au niveau du composant réparti (120) après la transmission de l'état de défaut de réception distant extrait au composant réparti (120).

4. Procédé selon la revendication 1, dans lequel ladite transmission se produit par l'intermédiaire de la connexion croisée (401).

5. Procédé selon la revendication 1, dans lequel l'état de défaut de réception distant est inclus à l'intérieur d'intervalles de temps système inutilisés dans des données transmises par le composant distant (110).

6. Composant (120) pour fournir un état de défaut de réception d'un composant distant (110) à une pluralité de composants répartis (130) dans un réseau de communication, ledit composant comprenant :
des moyens pour recevoir l'état de défaut de réception distant à partir du composant distant (110) au niveau du composant (120) séparé du composant distant ;
des moyens pour extraire l'état de défaut de réception distant d'un train de paquets venant du composant distant (110) ; **caractérisé par** :
des moyens pour générer une valeur de défaut et transmettre la valeur de défaut à une matrice de connexion d'ordre supérieur et d'ordre inférieur unifiée (401) maintenue à l'intérieur du composant réparti (110) à l'aide d'un octet de temps système (61) ;
des moyens pour altérer la matrice de connexion de façon à indiquer un état de défaut pour un canal de transmission correspondant au composant distant (110) en fonction de la valeur de défaut ; et
des moyens pour transmettre la valeur de défaut à des canaux de transmission appropriés à l'aide de l'octet de temps système (61).

7. Composant selon la revendication 6, dans lequel la matrice de connexion croisée d'ordre supérieur et d'ordre inférieur unifiée (401) est configurée de façon à fournir une interface entre le composant (120) et la pluralité de composants répartis (130), ladite matrice de connexion croisée d'ordre supérieur et d'ordre inférieur unifiée (401) interagissant avec une matrice de connexion croisée d'indication de défaut configurée de façon à traiter des indications de défaut distant, le composant (120) comprenant de plus :
un trajet d'achèvement et d'adaptation d'ordre supérieur configuré de façon à recevoir des données d'ordre supérieur (402) ;
un trajet d'achèvement et d'adaptation d'ordre inférieur configuré de façon à recevoir des données d'ordre inférieur (412), et
des trajets d'indication de défaut de réception distant entrants et sortants (451a, 451b, 452a, 452b) pour recevoir un état de défaut distant et transmettre au moins une indication de défaut distant à l'aide de l'octet de temps système (61) sur un trajet soit d'ordre supérieur soit d'ordre inférieur et à l'aide de la matrice de connexion croisée d'indication de défaut, ces trajets d'indication de défaut distant entrants et sortants étant en parallèle avec le trajet d'achèvement et d'adaptation d'ordre supérieur et le trajet d'achèvement et d'adaptation d'ordre inférieur.

8. Composant selon la revendication 7, ledit composant (120) servant à générer chaque indication de défaut distant en fonction d'un état de défaut déterminé au niveau du composant (120).

9. Composant selon la revendication 7, ledit composant (120) servant à déterminer un état de défaut pour le composant distant (110).

10. Composant selon la revendication 9, lequel composant (120) sert à transmettre l'état de défaut pour le composant distant (110).

11. Composant selon la revendication 6, dans lequel l'altération de la matrice de connexion (401) indique un état de défaut pour un canal de transmission correspondant associé au composant réparti (130).

12. Composant selon la revendication 7, dans lequel le trajet d'achèvement et d'adaptation d'ordre supérieur comprend au moins un composant d'achèvement (403, 406) et au moins un composant d'adaptation (404, 405).

13. Composant selon la revendication 7, dans lequel le trajet d'achèvement et d'adaptation d'ordre inférieur comprend au moins un composant d'achèvement (413, 416) et au moins un composant d'adaptation (414, 415).

14. Système, comprenant :
au moins un composant (120) selon l'une quelconque des revendication 6 à 13 qui précèdent ;
au moins une carte de lignes (152, 175), comprenant :
un élément d'encadrement (176) ; et
un dispositif de commande ; et
la matrice de connexion croisée d'ordre supérieur et d'ordre inférieur unifiée (401) configurée de façon à assurer une intercommunication entre la carte de lignes et l'au moins un composant, la matrice comprenant :
un trajet d'achèvement et d'adaptation (402) d'ordre supérieur (163) configuré de façon à recevoir des données d'ordre supérieur ;
un trajet d'achèvement et d'adaptation (412) d'ordre inférieur (165) configuré de façon à recevoir des données d'ordre inférieur ; et
des trajets d'indication de défaut de réception distant entrants et sortants (451a, 451b, 452a, 452b) pour recevoir l'état de défaut distant et transmettre au moins une valeur de défaut à des canaux de transmission appropriés à l'aide d'un octet de temps système sur un trajet soit d'ordre supérieur soit d'ordre inférieur par l'intermédiaire d'une matrice de connexion croisée d'indication de défaut dont les trajets d'indication de défaut distant entrants et sortants sont en parallèle avec le trajet d'achèvement et d'adaptation d'ordre supérieur (402) et le trajet d'achèvement et d'adaptation d'ordre inférieur (412).

15. Système selon la revendication 14, dans lequel la matrice (401) est compatible avec le TFI-5.

16. Système selon la revendication 14, dans lequel la matrice (401) est compatible avec le CSIX.

17. Système selon la revendication 14, dans lequel l'au moins une carte de lignes (152, 175) est apte à fournir une interface pour un réseau compatible avec des canaux à fibres.

18. Système selon la revendication 14, dans lequel l'au moins une carte de lignes (152, 175) est apte à fournir une interface pour un réseau compatible avec l'Ethernet.

19. Système selon la revendication 14, dans lequel l'au moins une carte de lignes (152, 175) est apte à effectuer un multiplexage à ajout-abandon.
